Europäisches Patentamt

European Patent Office

Office européen des brevets

(11) Veröffentlichungsnummer: **0 396 143**
**A2**

(12) **EUROPÄISCHE PATENTANMELDUNG**

(21) Anmeldenummer: **90108397.2**

(22) Anmeldetag: **04.05.90**

(51) Int. Cl.5: **B23D 47/02, B23D 45/02, B23Q 1/16**

(30) Priorität: **05.05.89 DE 8905661 U**

(43) Veröffentlichungstag der Anmeldung:
**07.11.90 Patentblatt 90/45**

(84) Benannte Vertragsstaaten:
**BE CH DE ES FR IT LI NL**

(71) Anmelder: **KAMRO Maschinenbau GmbH**
**Ambossweg 4**
**D-3162 Uetze(DE)**

(72) Erfinder: **Palm, Wilhelm**
**Ambossweg 4**
**D-3162 Uetze(DE)**

(74) Vertreter: **Gramm, Werner, Prof. Dipl.-Ing. et al**
**Patentanwälte Gramm + Lins**
**Theodor-Heuss-Strasse 2**
**D-3300 Braunschweig(DE)**

(54) **Querschlitten für eine Kreissäge.**

(57) Die Erfindung betrifft einen Querschlitten für eine Kreissäge. Um diesen Querschlitten zur Aufnahme schwerer Werkstücke geeignet zu machen, wird ein drehbarer Auflagetisch vorgeschlagen, der einen Unterrahmen sowie einen Oberrahmen umfaßt, die über eine Drehring mittig miteinander verbunden sind.

*Fig. 1*

EP 0 396 143 A2

# Querschlitten für eine Kreissäge

Die Erfindung betrifft einen Querschlitten für eine Kreissäge.

Der Erfindung liegt die Aufgabe zugrunde, einen derartigen Querschlitten zu entwickeln, der insbesondere zur Aufnahme schwerer Werkstücke geeignet ist.

Diese Aufgabe wird gemäß der Erfindung gelöst durch einen drehbaren Auflagetisch, der einen Unterrahmen sowie einen Oberrahmen umfaßt, die über einen Drehring mittig miteinander verbunden sind.

Dabei ist es zweckmäßig, wenn der Drehring fest mit dem Unterrahmen verbunden ist.

Es ist vorteilhaft, wenn der Oberrahmen um 360° stufenlos verdrehbar und in der gewünschten Verdrehstellung feststellbar ist. Der Drehring ist dabei vorzugsweise mit einer Winkelskala versehen, auf der der gewünschte Einstellwinkel ablesbar ist.

Der Oberrahmen ist, ebenso wie der Unterrahmen, vorzugsweise aus Stahlprofilen zusammengesetzt, die z. B. Kastenprofile sein können. Auf dem Oberrahmen kann ein z. B. aus Aluminium bestehender Profilanschlag für das Werkstück festlegbar sein. Das Werkstück wird dann in der gewünschten Gehrung an dem Anschlag angelegt und gesägt.

Der Oberrahmen kann eine große Auflagefläche aufweisen. Die zusammengesetzten Stahlprofile ermöglichen die Aufnahme auch schwerer Werkstücke.

In der Zeichnung ist eine als Beispiel dienende Ausführungsform der Erfindung dargestellt. Es zeigen:

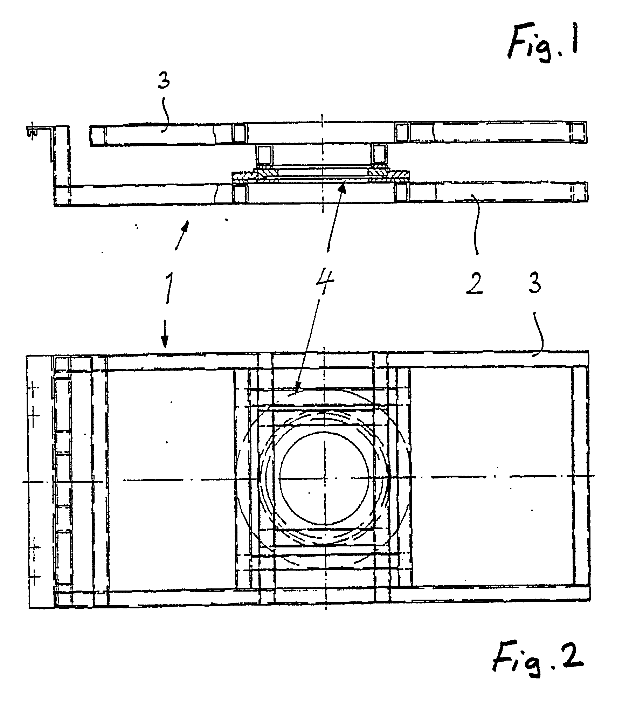

Figur 1 einen Querschlitten im lotrechten Querschnitt und

Figur 2 den Querschlitten gemäß Figur 1 in Draufsicht.

Der dargestellte Querschlitten ist gekennzeichnet durch einen drehbaren Auflagetisch 1, der einen Unterrahmen (2) sowie einen Oberrahmen (3) umfaßt, die über einen Drehring (4) mittig miteinander verbunden sind. Die beiden Rahmen (2, 3) sind jeweils aus kastenförmigen Stahlprofilen zusammengesetzt.

## Ansprüche

1. Querschlitten für eine Kreissäge, gekennzeichnet durch einen drehbaren Auflagetisch (1), der einen Unterrahmen (2) sowie einen Oberrahmen (3) umfaßt, die über einen Drehring (4) mittig miteinander verbunden sind.

2. Querschlitten nach Anspruch 1, dadurch gekennzeichnet, daß der Drehring (4) fest mit dem Unterrahmen (2) verbunden ist.

3. Querschlitten nach Anspruch 1 oder 2, dadurch gekennzeichnet, daß der Oberrahmen (3) um 360° stufenlos verdrehbar und in der gewünschten Verdrehstellung feststellbar ist.

4. Querschlitten nach Anspruch 1, 2 oder 3, dadurch gekennzeichnet, daß der Drehring (4) mit einer Winkelskala versehen ist.

5. Querschlitten nach einem der vorhergehenden Ansprüche, dadurch gekennzeichnet, daß der Oberrahmen (3) aus Stahlprofilen zusammengesetzt ist.

6. Querschlitten nach einem der vorhergehenden Ansprüche, dadurch gekennzeichnet, daß auf dem Oberrahmen (3) ein Profilanschlag für das Werkstück festlegbar ist.

Fig.1

3

1

4

2

3

Fig.2